# FASCICULE DE BREVET EUROPEEN

(11) **EP 0 509 914 B1**
(45) Date de publication et mention de la délivrance du brevet: **20.09.1995**
(21) Numéro de dépôt: 92401053.1
(22) Date de dépôt: 15.04.1992
(51) Int. Cl.: H02J 7/14

(54) **Circuit électrique bi-tension à signalisation de défaut perfectionnée, notamment pour véhicule automobile**
Elektrische Versorgungsschaltung mit zwei-Betriebsspannungen zur verbesserten Fehlermeldung, namentlich für Kraftfahrzeug
Dual voltage electrical circuit for improved fault indication, especially for an automobile vehicle

(30) Priorité: 19.04.1991 FR 9104854
(43) Date de publication de la demande: 21.10.1992
(73) Titulaire: VALEO EQUIPEMENTS ELECTRIQUES MOTEUR, 94000 Créteil (FR)
(72) Inventeur: Perrier, Pierre, F-75013 Paris (FR); Pierret, Jean-Marie, F-75012 Paris (FR); Brandy, Frédéric, F-94250 Gentilly (FR)
(74) Mandataire: Schrimpf, Robert

(56) Documents cités:
- EP-A- 0 018 836
- BE-A- 857 585
- DE-A- 2 101 270
- US-A- 4 336 485
- US-A- 4 604 565

## Description

La présente invention concerne d'une façon générale les circuits d'alternateurs pour la charge de batteries dans le domaine des véhicules automobiles.

Il est bien connu de prévoir dans un tel circuit d'alternateur une lampe témoin placée sur le tableau de bord du véhicule et destinée à indiquer notamment un défaut d'auto-excitation de l'alternateur. La lampe est classiquement branchée entre la tension V_{D+} délivrée par le pont redresseur auxiliaire (diodes trio) de l'alternateur et la tension V_{B+} à la borne positive de la batterie. Elle s'éteint seulement lorsque ces tensions sont voisines l'une de l'autre.

Il existe à l'heure actuelle une tendance à utiliser dans des véhicules automobiles un double réseau électrique, comprenant deux alternateurs associés à deux batteries. Un tel réseau bi-tension présente plusieurs avantages. D'une part, en doublant la tension d'alimentation de dispositifs de bord ayant une consommation électrique importante (le réseau bi-tension est capable de délivrer par exemple 28 volts entre deux de ses bornes au lieu des 14 volts classiques), on divise essentiellement par deux le courant consommé, ce qui permet d'utiliser des conducteurs électriques de plus faible section et donc plus économiques. Par ailleurs, dans le cas de l'alimentation de moteurs électriques dont le sens de rotation doit pouvoir être inversé, les moyens de commutation associés sont simplifiés de par la disponibilité de deux tensions soit ±14 volts. Enfin, dans le cas où le véhicule comporte des projecteurs pourvus de lampes à décharge, le circuit d'alimentation à haute tension de ces lampes peut travailler à partir d'une tension continue deux fois plus élevée, ce qui signifie que certains composants, en particulier le transformateur élévateur de tension classiquement prévu dans de tels circuits, peuvent être choisis avec un encombrement et un coût réduits.

Une approche immédiate en matière de signalisation de défauts dans un tel réseau bi-tension consiste à prévoir deux lampes-témoins respectivement associées aux deux circuits d'alternateurs. Cependant, il peut s'avérer indésirable ou difficile de prévoir sur le tableau de bord des emplacements pour deux lampes, soit pour des raisons de coût de revient, soit par manque de place.

Le document DE-A-2 101 270 propose une solution à une lampe témoin unique pour un circuit à deux alternateurs qui sont montés en parallèle pour charger une batterie unique.

La présente invention vise à proposer un circuit qui permette d'utiliser une lampe témoin unique pour deux circuits d'alternateurs associés à deux batteries montées en série, et ceci sans compliquer ou accroître sensiblement le coût de ces circuits.

Elle concerne à cet effet un circuit d'alternateur bi-tension, du type comportant deux alternateurs chacun étant associé à une de deux batteries montées en série l'une avec l'autre, et deux moyens de commande du courant d'excitation des alternateurs recevant chacun une tension continue issue d'un pont redresseur auxiliaire associé à chaque alternateur, caractérisé en ce qu'il comprend une lampe témoin de fonctionnement unique reliée d'un côté à une borne d'une première batterie située à l'opposé de l'autre batterie et de l'autre côté d'une part au pont redresseur auxiliaire de l'autre batterie par l'intermédiaire d'un moyen de décalage de tension capable de laisser passer un courant dans la lampe lorsque la tension à ses bornes est supérieure à une valeur prédéterminée et environ égale à la tension nominale de la première batterie et d'autre part au pont redresseur auxiliaire de la première batterie par l'intermédiaire d'un moyen à conduction unidirectionnelle empêchant un courant de circuler d'un pont redresseur auxiliaire vers l'autre.

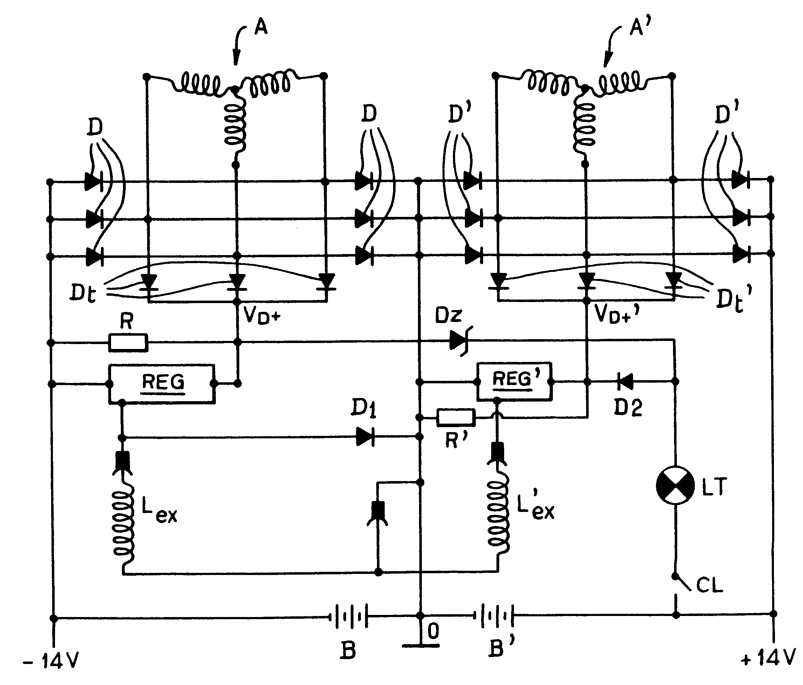

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel la figure unique est un schéma général d'un circuit bi-alternateur selon la présente invention.

En référence à la figure, on a représenté un circuit bi-tension qui comprend deux alternateurs triphasés A et A′ respectivement associés à deux batteries B et B′. Le pôle positif de B est relié au pôle négatif de B′, cette liaison étant à la masse. L'on dispose ainsi par rapport à la masse d'une tension ±V et, entre la borne négative de B et la borne positive de B′, d'une tension de 28V, avec par exemple V = 14 volts (ou légèrement moins, selon l'état de charge des batteries).

A chaque alternateur A et A′ sont classiquement associés un pont redresseur principal (diodes D et D′, respectivement) et un pont redresseur auxiliaire (diodes trio Dt et Dt′, respectivement). Les potentiels en sortie des ponts auxiliaires sont notées V_{D+} et V_{D+}′, respectivement.

L'alternateur A est équipé d'un circuit régulateur REG branché sur la sortie de son pont auxiliaire, sur une première borne d'un enroulement d'excitation Lex de l'alternateur A et sur la borne négative de B. La seconde borne de Lex est reliée à la borne positive de B, c'est-à-dire à la masse. Une résistance R est prévue entre le point commun des diodes trio Dt et la borne négative de B. Une diode D1 est branchée dans le sens passant entre la première borne de Lex et la masse.

L'alternateur A′ est équipé d'un circuit régulateur REG′ branchée sur son pont auxiliaire, sur la masse et sur une première borne de l'enroulement d'excitation Lex′ de A′. La seconde borne de Lex′ est reliée à la masse. Une résistance R′ est reliée entre le point commun des diodes trio Dt′ et la masse.

Une clé de contact CL, représentée sous forme d'un interrupteur, est branchée entre la borne positive de B′ et une première borne d'une lampe témoin LT. Une diode Zéner Dz, de tension d'avalanche appropriée, est branchée dans le sens passant entre la sortie du pont auxiliaire du premier alternateur A et la seconde borne de la lampe LT. Enfin une diode D2 est branchée dans le sens passant entre ladite seconde borne de LT et la sortie du pont auxiliaire du second alternateur A′.

La tension d'avalanche de Dz est choisie approximativement égale à la tension V, soit dans le présent exemple environ 14 volts. La diode D2 est une diode ordinaire, avec une chûte de tension directe minimale. La Diode D1 est une diode de roue libre associée à l'enroulement inducteur Lex.

On va maintenant expliquer le fonctionnement du montage décrit ci-dessus. Tout au long de cette explication, les valeurs de tensions indiquées le seront par rapport à la masse.

Lorsque la clé CL est fermée et que le second alternateur A′ n'est pas encore amorcé, la tension V_{D+}′ n'est pas fixée et le régulateur REG′ est en position plein champ, c'est-à-dire que son transistor de puissance qui alimente l'enroulement Lex est totalement passant, ce qui signifie une liaison faiblement résistive entre la sortie du pont auxiliaire de A′ et la première borne de Lex′. Un courant peut donc circuler depuis la borne positive de B′, à travers CL, LT, D2, REG′ et Lex′ jusqu'à la masse. La lampe, traversée par ce courant, est donc allumée.

Dans le cas où il existe une rupture de liaison électrique entre le régulateur REG′ et l'enroulement d'excitation Lex′, ou bien au niveau du transistor de puissance de REG′, alors un courant circule tout de même à travers CL, LT, D2 et R′, si bien que la lampe s'allume tout de même, éventuellement avec une intensité lumineuse moindre. Le défaut est donc signalé.

On notera que, dans la situation ci-dessus (clé fermée, A′ non amorcé), si A est amorcé, alors le potentiel V_{D+} est supérieur d'environ 14 volts au potentiel de -14 volts présent sur la borne négative de V, et est donc proche de O volt. La diode zéner Dz ayant une tension d'avalanche d'environ 14 volts, aucun courant ne circule donc dans celle-ci.

Dans le cas où A n'est pas amorcé alors que A′ est amorcé, alors le potentiel V_{D+} n'est pas fixé et il tend à exister aux bornes de Dz une tension (de l'ordre de 28 volts) supérieure à sa tension d'avalanche. Dz étant alors passante, un courant peut circuler à travers CL, LT, Dz et R (et éventuellement à travers REG en parallèle avec R), si bien que la lampe est allumée. Il est à noter que dans ce cas, la lampe est alimentée sous une tension d'environ 14 volts, du fait que la diode Dz absorbe environ la moitié de la tension de 28 volts entre les extrémités du trajet de courant décrit ci-dessus.

La diode D2 a pour objet d'éviter qu'un courant ne circule dans Dz à partir du pont auxiliaire de l'alternateur A′ lorsque ce dernier est amorcé.

Dans la situation où aussi bien A que A′ ne sont pas amorcés, alors la lampe s'allume grâce à un courant qui circule soit dans le trajet CL, LT, D2, REG′, Lex′ (ou R′), soit dans le trajet CL, LT, Dz, R (ou REG), Lex (ou R), soit à la fois dans ces deux trajets, la répartition du courant entre ceux-ci dépendant essentiellement des caractéristiques des étages de puissance de REG et REG′, de la diode Dz et des deux batteries B et B′.

De même, la lampe LT s'allume lorsqu'au niveau de l'un ou l'autre des alternateurs, il existe une insuffisance d'excitation ou purement et simplement une coupure dans le circuit d'excitation.

Lorsque maintenant les deux alternateurs fonctionnent normalement, la tension V_{D+} est supérieure d'environ +14 volts à la tension de -14 volts présente sur la borne négative de B, et donc proche de 0 volt. La tension sur l'anode de Dz (à droite sur la figure) est supérieure à cette tension d'une valeur égale à sa tension d'avalanche, et vaut donc environ +14 volts. La tension V_{D+}′ vaut quant à elle également +14 volts. Le potentiel à la seconde borne de la lampe LT est donc dans tous les cas proche de +14 volts, et la lampe voit donc à ses bornes une différence de potentiel proche de zéro et est éteinte.

Ainsi la lampe LT est capable de signaler, en s'allumant, un non amorçage ou un défaut dans l'un ou l'autre des circuits d'alternateurs, tandis qu'elle est éteinte seulement si les deux circuits d'alternateurs fonctionnent correctement.

Bien entendu, la présente invention n'est nullement limitée à la forme de réalisation décrite ci-dessus et représentée sur les dessins, mais l'homme de l'art saura y apporter toute variante ou modification conforme à l'invention telle que définie par les revendications.

En particulier, elle s'applique non seulement à des réseaux bi-tension symétriques, mais également à des réseaux bi-tension comportant deux batteries de tensions différentes, par exemple 14 volts/ 28 volts ou encore 14 volts/42 volts. Il suffit dans ce cas, pour retrouver le fonctionnement décrit ci-dessus, de modifier si nécessaire la tension d'avalanche de la diode Dz, qui doit être environ égale à la tension nominale de la batterie B′.

Par ailleurs, la diode zéner Dz peut être remplacée par tout moyen de décalage de tension équivalent.

## Revendications

1. Circuit d'alternateur bi-tension, du type comportant deux alternateurs (A, Lex; A′, Lex′) chacun étant associé à une de deux batteries (B, B′) montées en série l'une avec l'autre, et deux moyens de commande (REG, REG′) du courant d'excitation des alternateurs recevant chacun une tension continue (V_{D+}, V_{D+}′) issue d'un pont redresseur auxiliaire (Dt, Dt′) associé à chaque alternateur, caractérisé en ce qu'il comprend une lampe témoin de fonctionnement unique (LT) reliée d'un côté à une borne d'une première batterie (B′) située à l'opposé de l'autre batterie (B) et de l'autre côté d'une part au pont redresseur auxiliaire (Dt) de l'autre batterie par l'intermédiaire d'un moyen de décalage de tension (Dz) capable de laisser passer un courant dans la lampe lorsque la tension à ses bornes est supérieure à une valeur prédéterminée et environ égale à la tension nominale de la première batterie (B′) et d'autre part au pont redresseur auxiliaire (Dt′) de la première batterie (B′) par l'intermédiaire d'un moyen à conduction unidirectionnelle (D2) empêchant un courant de circuler d'un pont redresseur auxiliaire vers l'autre.

2. Circuit selon la revendication 1, caractérisé en ce que le moyen de décalage de tension comprend une diode zéner (Dz).

3. Circuit selon la revendication 2, caractérisé en ce que la diode zéner (Dz) présente une tension d'avalanche constituant ladite valeur prédéterminée.

4. Circuit selon l'une des revendications 1 à 3, caractérisé en ce que le moyen à conduction unidirectionnelle comprend une diode (D2).

5. Circuit selon l'une des revendications 1 à 4, caractérisé en ce que qu'il comprend en outre des résistances (R, R′) en parallèle avec les moyens de commande (REG, REG′) de courant d'excitation.

## Patentansprüche

1. Generatorschaltung mit zwei Betriebsspannungen, bestehend aus zwei Wechselstromgeneratoren (A, Lex; A′, Lex′), die jeweils einer von zwei miteinander in Serie geschalteten Batterien (B, B′) zugeordnet sind, und zwei Steuerungsmitteln (REG, REG') für den Erregerstrom der Wechselstromgeneratoren, die jeweils eine Gleichspannung (V_{D+}, V_{D+}′) erhalten, die von einer jedem Wechselstromgenerator zugeordneten Hilfsgleichrichterbrücke (Dt, Dt′) stammt, **dadurch gekennzeichnet**, daß sie eine einzige Funktionskontrollampe (LT) enthält, die einerseits mit einer Klemme einer ersten Batterie (B′) verbunden ist, die entgegengesetzt zu der anderen Batterie (B) angeordnet ist, und andererseits zum einen mit der Hilfsgleichrichterbrücke (Dt) der anderen Batterie über ein Spannungsverschiebemittel (Dz), das in der Lage ist, einen Strom in der Lampe fließen zu lassen, wenn die Spannung an seinen Klemmen größer als ein vorgegebener Wert und in etwa gleich der Nennspannung der ersten Batterie (B′) ist, sowie zum anderen mit der Hilfsgleichrichterbrücke (Dt′) der ersten Batterie (B′) über ein in einer Richtung leitendes Mittel, das einen Strom daran hindert, von einer Hilfsgleichrichterbrücke zur anderen zu fließen.

2. Schaltung nach Anspruch 1 , **dadurch gekennzeichnet**, daß das Spannungsschiebemittel eine Zenerdiode (Dz) enthält.

3. Schaltung nach Anspruch 2, **dadurch gekennzeichnet**, daß die Zenerdiode (Dz) eine Durchbruchspannung aufweist, die den genannten vorgegebenen Wert bildet.

4. Schaltung nach einem der Ansprüche 1 bis 3 , **dadurch gekennzeichnet**, daß das in einer Richtung leitende Mittel eine Diode (D2) enthält.

5. Schaltung nach einem der Ansprüche 1 bis 4 , **dadurch gekennzeichnet**, daß sie außerdem Widerstände (R, R′) enthält, die mit den Steuerungsmitteln (REG, REG′) für den Erregerstrom parallel geschaltet sind.

## Claims

1. A dual-voltage alternator circuit, of the type comprising two alternators (A, Lex; A′, Lex′), each of which is associated with one of two series-connected batteries (B, B′), and two control means (REG, REG′) for controlling the excitation current of the alternators, each control means receiving a d.c. voltage (VD+, VD+′) provided by an auxiliary rectifier bridge (Dt, Dt′) associated with each alternator, the circuit being characterized in that it includes a single operation warning lamp (LT), one side of which is connected to a terminal of a first battery (B′) situated remote from the other battery (B), and the other side of which is connected both to the auxiliary rectifier bridge (Dt) of the other battery via a voltage offsetting means (Dz) which is capable of allowing a current to flow through the lamp when the voltage at its terminals is greater than a predetermined value approximately equal to the nominal voltage of the first battery (B′), and to the auxiliary rectifier bridge (Dt′) of the first battery (B′) via a uni-directional conduction means (D2) which prevents the flow of current from one auxiliary rectifier bridge towards the other.

2. A circuit according to claim 1, characterized in that the voltage offsetting means comprises a zener diode (Dz).

3. A circuit according to claim 2, characterized in that the zener diode (Dz) has a breakdown voltage which constitutes said predetermined value.

4. A circuit according to any of claims 1 to 3, characterized in that the uni-directional conducting means comprises a diode (D2).

5. A circuit according to any of claims 1 to 4, characterized in that it also includes resistors (R, R′) in parallel with the control means (REG, REG′) for controlling the excitation current.
